# EUROPEAN PATENT APPLICATION

(11) **EP 4 818 541 A1**
(43) Date of publication of application: **07.10.2026**
(21) Application number: 26163281.4
(22) Date of filing: 09.03.2026
(51) Int. Cl.: F16D 11/10, F16D 11/14, F16D 21/04, F16D 25/08

(54) **IMPROVED DOG CLUTCH ASSEMBLY FOR A TRANSMISSION OF A WORK VEHICLE**

(30) Priority: 31.03.2025 IT 202500006747
(71) Applicant: CNH Industrial Italia S.p.A., 10156 Torino (IT)
(72) Inventor: Forte, Michelantonio, 10156 Turin (IT)
(74) Representative: CNH Industrial IP Department

(57) **Abstract**

A dog clutch assembly (1) for a transmission assembly of a work vehicle comprising a selection element configured to selectively engage a first toothed wheel (7") with an output shaft (5). The selection element comprising a sliding sleeve (11) carried in an axially slidable and angularly rigid manner by the output shaft (5), a second toothed wheel (13) carried in a rigid manner by said sliding sleeve (11), a third toothed wheel (15) carried in a rigid manner by the second toothed wheel (7") and configured to selectively engaged with the second toothed wheel (13), and actuation means (25) configured to move said sliding sleeve (11) along said reference axis (A) between a neutral position and an engaged position. The actuation means comprising a fork (25) configured to be operatively interposed between the sliding sleeve (11) and an actuator and a support element (26), which is interposed between the fork (25) and the sliding sleeve (11) is carried in a free rotatable manner and axially rigid manner by the sliding sleeve (11) and is connected to the fork (25).

## Description

### TECHNICAL FIELD

The present invention relates to a dog-clutch assembly for a transmission of a work vehicle, in particular to a negative dog-clutch assembly for a transmission of a work vehicle.

The present invention finds its preferred, although not exclusive, application in an agricultural vehicle, such as a tractor. Reference will be made to this application by way of example below.

### BACKGROUND OF THE INVENTION

As is known, a dog clutch (also known as dog box or positive clutch) is a type of clutch in which torque transmission occurs via engagement of interlocking teeth between two gears, rather than by friction.

Conventional dog clutches assemblies generally comprise:
- a rotating sliding sleeve carried by a first transmission shaft in an axially slidable and angularly rigid manner, for instance by means of a spline,
- a first toothed wheel rigidly carried by the sliding sleeve,
- a second toothed wheel connected to a second transmission shaft and adapted to selectively engage with the first toothed wheel, to allow torque transmission between the first and the second transmission shaft, and
- a selector device, for example a fork, which is adapted to axially move the rotating sliding sleeve in order to selectively engage the first toothed wheel with the second toothed wheel and allow motion transmission between the two transmission shafts.

The selector device is generally stationary (i.e. is not rotatable) and moves along the axial direction to engage the sliding sleeve. In addition, the selector device is always in contact with the rotating sliding sleeve and is provided, at its ends, with pads of low-friction material to reduce the friction and the wear at the interface between the rotating sliding sleeve and the stationary fork.

The aforementioned dog clutches are generally positive dog clutches, in which the fork is required to exert an axial force only for the limited transient to move the sliding sleeve and engage the toothed wheels with each other. The tooths of the toothed wheels are shaped so as to maintain engagement once coupled.

The above configuration, however, is not adapted to be applied with negative dog clutches, in which it is required a constant application of an axial force on the sliding sleeve from the fork to maintain the toothed wheel engaged. Indeed, in a negative dog clutch, the tooths of the toothed wheels are shaped so as to generate an axial force that tends to disengage the wheels.

In particular, in such case, the friction between the rotating sliding sleeve and the stationary fork would massively increase the temperature and the wear between the sliding sleeve and the fork, affecting the reliability of the transmission during use.

In view of the above, the need is felt for improvements in the field of work vehicles, in particular by addressing the aforementioned drawbacks and providing a negative dog clutch with simplified control and increased reliability.

Aim of the present invention is to satisfy the above mentioned needs in a cost effective and optimized manner.

### SUMMARY OF THE INVENTION

The aforementioned aim is reached by a dog clutch assembly, by a transmission assembly and by a vehicle as claimed in the appended set of claims.

### BRIEF DESCRIPTION OF THE DRAWINGS

For a better understanding of the present invention, a preferred embodiment is described in the following, by way of a non-limiting example, with reference to the attached drawings, wherein:
- Figure 1 is a side view of a clutch assembly according to a first embodiment of the present invention, with parts in cross-section and parts removed for clarity,
- Figures 2 and 3 are side views of the clutch assembly illustrated in Figure 1, in different operating positions, with parts in cross-section and parts removed for clarity,
- Figure 4 is a perspective and partially exploded view of a component of the clutch assembly illustrated in Figure 1,
- Figure 5 is a side view of a clutch assembly according to a second embodiment of the present invention, with parts in cross-section and parts removed for clarity; and
- Figures 6 and 7 are side views of the clutch assembly illustrated in Figure 4, in different operating positions, with parts in cross-section and parts removed for clarity.

### DETAILED DESCRIPTION OF THE INVENTION

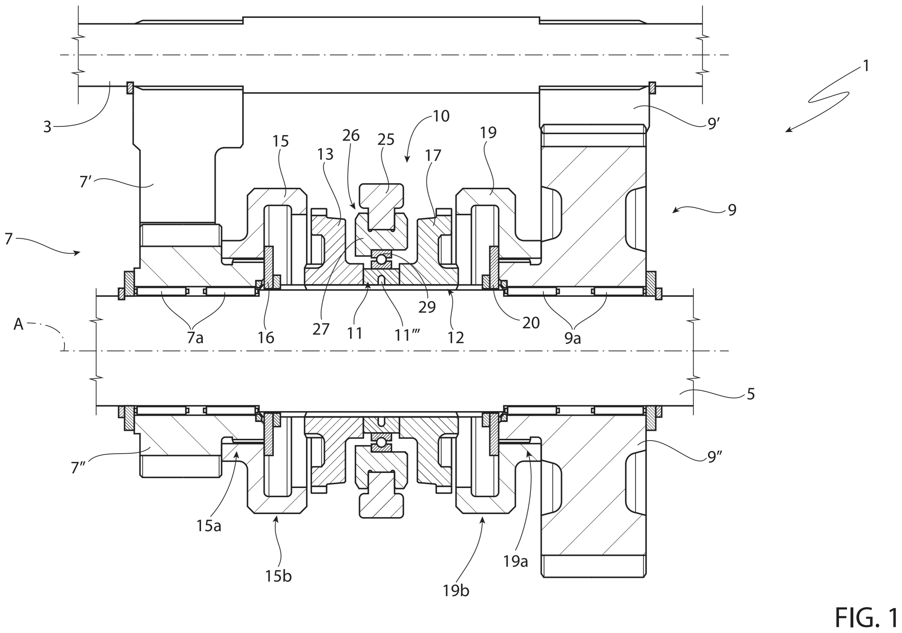

With reference to Figure 1, number 1 denotes as a whole a dog clutch assembly for a transmission of a work vehicle, in particular for a transmission of an agricultural vehicle such as a tractor.

As known, the work vehicle comprises a work vehicle body resting on the ground by means of a plurality of ground engaging wheels or tracks.

In addition, as always known the work vehicle comprises a powertrain assembly, which is carried by the work vehicle body and is configured to provide torque to allow motion of the work vehicle body with respect to the ground.

In particular, powertrain assembly comprises an engine, such as an internal combustion engine, and a transmission assembly operatively interposed between the engine and an axle shaft coupled at least to a pair of said ground engaging wheels or tracks to transmit these latter the torque provided at output by the engine.

As known, the transmission assembly comprises an input shaft (not illustrated) adapted to be connected to the engine of the work vehicle, and an output shaft adapted to be coupled to at least one drive axle of the work vehicle.

In addition, as per se known and therefore not described in detail, transmission assembly may comprise one or more friction clutches and a plurality of gears adapted to selectively engage the input shaft with the output shaft of the transmission assembly and define different gear ratios, so as to allow the torque transmission to the axle shaft coupled to the wheels.

More in detail, as always known, the transmission assembly may comprise, operatively connected in series to each other between input shaft and output shaft, an input stage carried by the input shaft, a gear ratio stage and a range gear ratio stage coupled to the output shaft of the same transmission assembly, to provide a plurality of transmission ratios between input shaft and output shaft.

The gears of the gear ratio stage and/or the range gear ratio stage may be selected by means of a selector mechanism, also known as dog clutch assembly.

Figure 1 illustrated a dog clutch assembly realized according to an embodiment of the present invention.

In particular, dog clutch assembly 1 is a negative dog clutch assembly, as explained more in detail in the following.

Dog clutch assembly 1 is configured to allow torque transmission between an input shaft 3 and an output shaft 5.

Output shaft 5 preferably extends along a reference axis A. For example, output shaft 5 is rotatable about reference axis A.

According to the illustrated example, dog clutch assembly 1 may be part of the range gear ratio stage of transmission assembly. Input shaft 3 may be connected to the gear ratio stage and output shaft 5 may be connected to a driving axle of work vehicle 1.

In other words, dog clutch assembly 1 is preferably interposed between input shaft 3 and output shaft 5. Dog clutch assembly 1 is configured to selectively engage input shaft 3 with output shaft 5.

With reference to the illustrated example, dog clutch assembly 1 comprises transmission means operatively interposed between input shaft 3 and output shaft 5 and selectively adapted to transmit torque between input shaft 3 and output shaft 5.

In particular, such transmission means comprise a first transmission member carried by input shaft and a second transmission member, which is operatively connected with the first transmission member. The second transmission member, in particular, is carried by output shaft in a free rotatable manner.

According to the preferred embodiment of the present invention, such transmission means comprise at least one gear 7 operatively interposed between input shaft 3 and output shaft 5 and selectively adapted to transmit torque between input shaft 3 and output shaft 5.

In particular, gear 7 preferably comprises a first toothed wheel 7' carried in an angular rigid manner by input shaft 3 and a second toothed wheel 7", which engages first toothed wheel 7' and is carried in a free rotatable manner by output shaft 5. Preferably, second toothed wheel 7'' is fitted on output shaft 5 by means of a bearing 7a, such as a needle bearing or the like.

According to the illustrated example, dog clutch assembly 1 preferably comprises two gears 7 and 9 interposed between input shaft 3 and output shaft 5, which have different gear ratios one with respect to the other and are selectively engageable to define different speed ratios.

Gear 9 preferably comprises a first toothed wheel 9' carried in an angular rigid manner by input shaft 2 and a second toothed wheel 9'', which engages first toothed wheel 9' and is carried in a free rotatable manner by output shaft 5. Preferably, second toothed wheel 9" is fitted on output shaft 5 by means of a bearing 9a, such as a needle bearing or the like.

Preferably, gear 7 and gear 9 are arranged one spaced from the other along reference axis A.

With reference to the exemplary embodiment illustrated in Figure 1, dog clutch assembly 1 further comprises selection member 10 configured to selectively engage input shaft 2 and output shaft 3 via said transmission means, for example via one of the gears 7 or 9 interposed between these latter.

More in detail, the selection member 10 of dog clutch assembly 1 are preferably carried in an axially slidable and angularly rigid manner by one between input shaft 3 or output shaft 5. According to the illustrated example, selection member 10 is preferably tubular in shape and is preferably fitted on output shaft 5 and may be connected to the same output shaft 5 by means of a spline 12.

Preferably selection member 10 is interposed between gear 7 and gear 9 along reference axis A.

With reference to the exemplary embodiment illustrated in Figure 1, selection member 10 comprises a central portion 11, which is preferably tubular in shape and is carried in an angular rigid and sliding manner by output shaft 5, for instance by means of a spline.

In addition, selection member 10 comprises at least one toothed wheel or sprocket or ring gear 13 (hub gear) rigidly carried by central portion 11.

In particular, toothed wheel 13 is carried in a rigid manner by central portion 11, so that it rotates and slides integral with this latter.

In addition, dog clutch assembly 1 comprises at least one further toothed wheel 15, which is adapted to selectively engage toothed wheel 13.

Toothed wheel 15 is connected to the second transmission member carried by output shaft, so as to rotate integral with this latter.

More in detail, toothed wheel 15 is preferably carried by toothed wheel 7'', so as to rotate integral with this latter.

Toothed wheel 15 preferably comprises a ring gear with an internal toothing adapted to engage with toothed wheel 13. The toothing of toothed wheel 15 is preferably arranged radially about reference axis A.

With reference to the exemplary embodiment illustrated in Figure 1, toothed wheel 15 may have a bell-shape or cup-shaped structure.

Toothed wheel 15 preferably comprises a central portion 15a rigidly connected to toothed wheel 7". Central portion 15a is preferably coupled to toothed wheel 7'' by means of a spline, in order to prevent rotation of toothed wheel 15 with respect to toothed wheel 7''.

Alternatively, central portion 15a may be rigidly fixed to toothed wheel 7'' for example by welding.

In addition, dog clutch assembly 1 is preferably provided with retaining means 16 configured to prevent axial movement of toothed wheel 15 and toothed wheel 7".

According to the preferred embodiment illustrated in Figure 1, 2 and 3, retaining means 16 are configured to restrain axial movements of both toothed wheel 15 and toothed wheel 7". In particular, retaining means 16 may comprise a Seeger ring or similar mechanical components.

In addition, toothed wheel 15 preferably comprises a peripheral portion 15b, which extends cantilevered from the central portion 15a. Preferably, the peripheral portion 15b extends cantilevered from the central portion in radial direction and in axial direction with respect to reference axis A. In addition, peripheral portion 15b preferably extends seamlessly in circumferential direction with respect to reference axis A.

With reference to the exemplary embodiment illustrated in Figure 1, peripheral portion 15b as a substantially U-shaped cross-section. The radial free end of the peripheral portion 15b is preferably provided with the inner toothing 15' adapted to engage with toothed wheel 13.

Preferably, the toothing of toothed wheel 13 and the toothing of toothed wheel 15 are configured to exert, when the two toothed wheels 13 and 15 rotate engaged to each other, a force comprising an axial component, along reference axis A, that bias the two wheels away from each other.

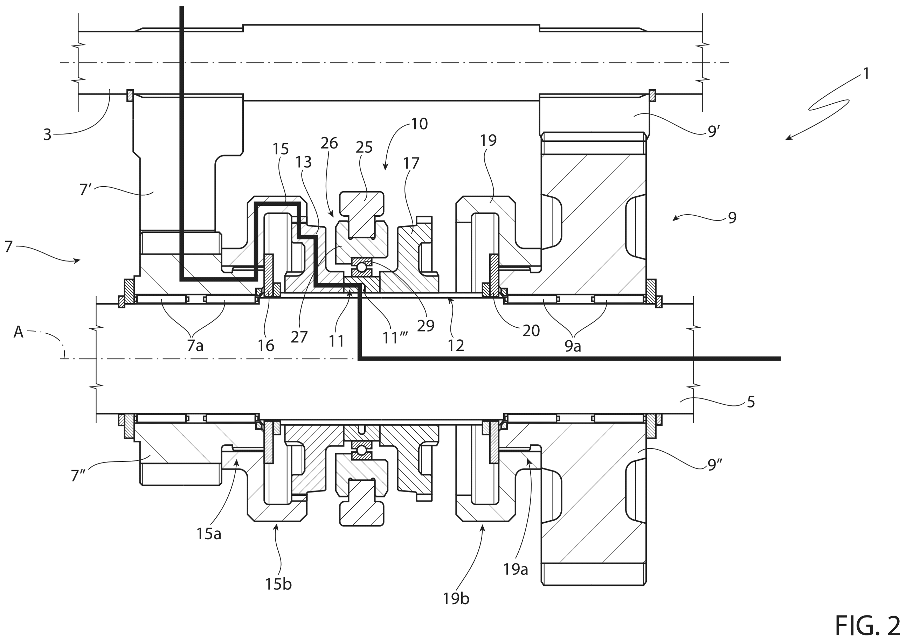

With reference to the preferred embodiment of the present invention illustrated in Figure 1, 2 and 3, actuation member 10 is movably carried by output shaft 5 and is movable at least between a neutral position (Figure 1) and a first engaged position (Figure 2), along reference axis A.

In the neutral position, toothed wheel 13 and toothed wheel 15 are spaced from each other and there is no torque transmission between input shaft 3 and output shaft 5.

As illustrated in Figure 2, in the first engaged position, toothed wheel 13 and toothed wheel 15 are engaged with each other, in order to allow torque transmission between input shaft 3 and output shaft 5 through gear 7.

With reference to the exemplary embodiment illustrated in Figure 1, dog clutch 1 preferably comprises a second toothed wheel or sprocket or ring gear 17 rigidly carried by central portion 11.

Preferably, first toothed wheel 13 and second toothed wheel 17 are carried on opposite sides of the same central portion 11 along reference axis A.

Toothed wheel 17 is preferably carried in a rigid manner by central portion 11, so that it rotates and slides integral with this latter.

In addition, dog clutch assembly 1 preferably comprises at least a second toothed wheel 19, which is adapted to selectively engage toothed wheel 15 and is carried by gear 6.

Toothed wheel 19 preferably comprises a ring gear with an internal toothing adapted to engage with toothed wheel 17. The toothing of toothed wheel 19 is preferably arranged radially about reference axis A.

More in detail, toothed wheel 19 is preferably rigidly carried by toothed wheel 9'', so as to rotate integral with this latter.

With reference to the exemplary embodiment illustrated in Figure 1, toothed wheel 19 may have a bell-shape or cup-shaped structure.

In particular, toothed wheel 19 preferably comprises a central portion 19a rigidly connected to toothed wheel 9".

Central portion 19a is preferably coupled to toothed wheel 9'' by means of a spline, in order to prevent rotation of toothed wheel 19 with respect to toothed wheel 9".

Alternatively, central portion 19a may be rigidly fixed to toothed wheel 9'' for example by welding.

In addition, dog clutch assembly 1 is preferably provided with retaining means 20 configured to prevent axial movement of toothed wheel 19 and toothed wheel 9".

According to the preferred embodiment illustrated in Figure 1, 2 and 3, retaining means 20 are configured to restrain axial movements of both toothed wheel 19 and toothed wheel 9''. In particular, retaining means 20 may comprise a Seeger ring or similar mechanical components.

In addition, toothed wheel 19 preferably comprises a peripheral portion 19b, which extends cantilevered from the central portion 19a. Preferably, the peripheral portion 19b extends cantilevered from the central portion in radial direction and in axial direction with respect to reference axis A. In addition, peripheral portion 19b preferably extends seamlessly in circumferential direction with respect to reference axis A.

With reference to the exemplary embodiment illustrated in Figure 1, peripheral portion 19b as a substantially U-shaped cross-section.

The radial free end of the peripheral portion 19b is preferably provided with the toothing 19' adapted to engage with toothed wheel 17.

Preferably, the toothing of toothed wheel 17 and the toothing of toothed wheel 19 are configured to exert, when the two toothed wheels 17 and 19 rotate engaged to each other, a force comprising an axial component, along reference axis A, that bias the two wheels away from each other.

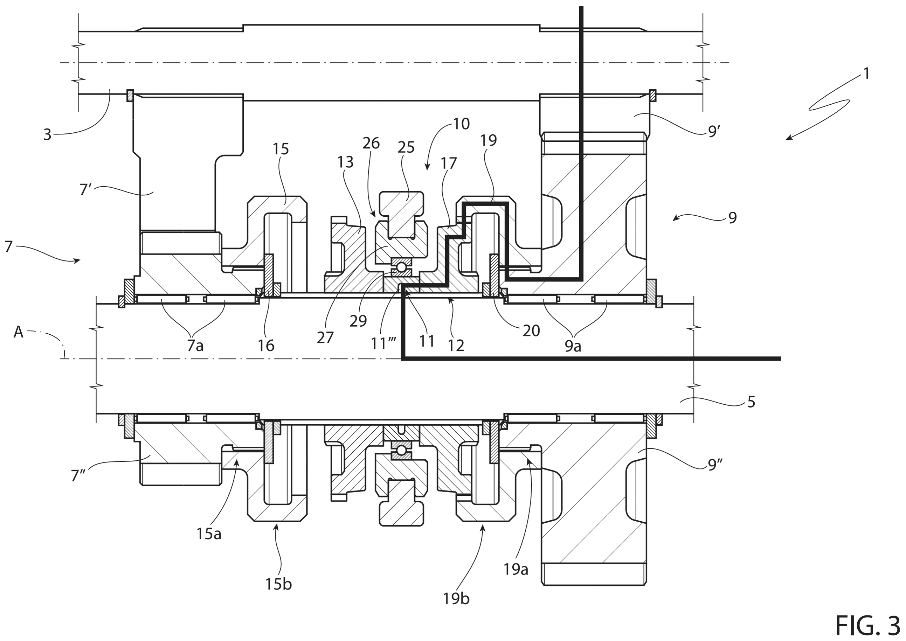

With reference to the preferred embodiment of the present invention illustrated in Figure 1, 2 and 3, selection member 10 is preferably further selectively movable in a second engaged position (Figure 3).

As illustrated in Figure 3, in the second engaged position, toothed wheel 17 and toothed wheel 19 are engaged with each other, in order to allow torque transmission between input shaft 3 and output shaft 5 through gear 7.

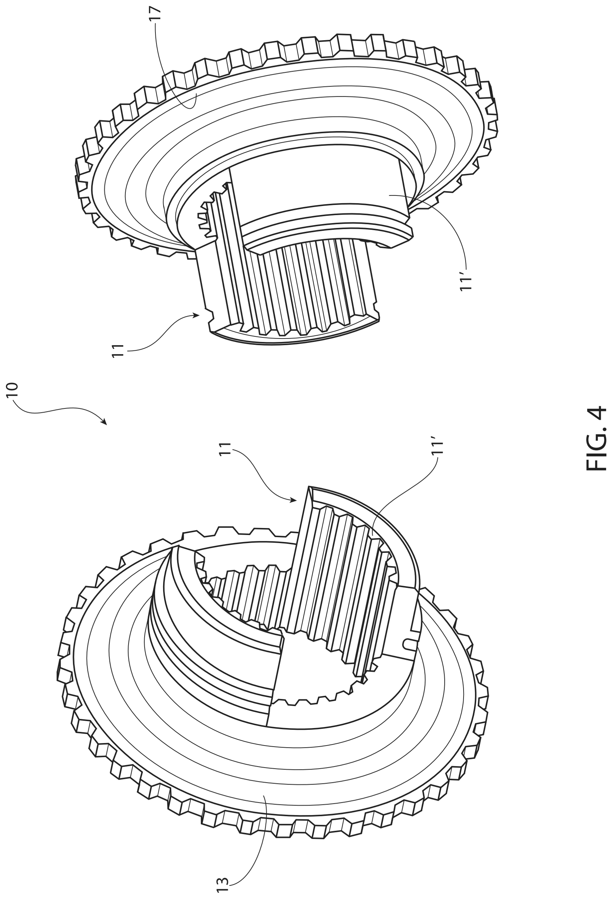

With reference to the preferred embodiment of the present invention illustrated in Figure 4, the central portion 11 of selection member 10 preferably comprises two complementary shaped bodies 11a and 11b, which are configured to be coupled to each other in an angular rigid manner, in order to form the same central portion 11. Preferably, body 11a is rigidly coupled with toothed wheel 13, and body 11b is rigidly coupled with toothed wheel 17. More in detail, body 11a is integral with toothed wheel 13, and body 11b is integral with toothed wheel 17.

Preferably, body 11a comprises one or more axial appendages 11', which extends cantilevered from toothed wheel 13 in an axial direction. Body 11b preferably comprises one or more axial appendages 11'', which extends cantilevered from toothed wheel 13 in an axial direction and are configured to be coupled, in particular to interlock, with axial appendages 11' in order to form the central body 11.

In the illustrated example, body 11a comprises two axial appendages 11' angularly spaced to each other about axis A and body 11b comprises two complementary shaped axial appendages 11'' angularly spaced to each other about axis A and configured to interlock with the appendages 11'.

In addition, selection member 10 preferably comprises retaining means 11''', such as a Seeger ring, interposed between appendages 11' and 11'' and configured to maintain these latter coupled to each other.

With reference to the exemplary embodiment illustrated in Figure 1, dog clutch assembly 1 further comprises actuation means, which are operatively coupled to sliding sleeve 11 and are configured to move this latter along reference axis A.

More in detail, actuation means comprises a lever or fork 25, which is operatively coupled to selection member 10, in particular to central portion 11, and is adapted to move this latter along reference axis A, between the neutral position, the first engaged position and/or the second engaged position.

In particular, fork 25 is preferably configured to exert on selection member 10 forces adapted to maintain the latter in its first engaged position and/or in its second engaged position, in order to keep engaged the corresponding gears.

Preferably, the fork 25 is axially movable along reference axis A and is not rotatable about the same reference axis A.

In addition, actuation means preferably comprises a hydraulic actuator (not illustrated), which is operatively coupled to fork 25 and is adapted to move this latter along reference axis A.

More in detail, during use hydraulic actuator is preferably configured to exert forces on fork 25 adapted to maintain sliding sleeve 11 in the first or in the second engaged position.

In addition, hydraulic actuator is preferably spring biased and when the hydraulic actuation pressure is removed, it is preferable configured to exert a force on fork 25 adapted to bias sliding sleeve 11 in the neutral position.

In other words, dog clutch assembly 1 comprises a negative dog clutch, i.e. a dog clutch that requires a constant application of an axial force on fork 25 to maintain the corresponding toothed wheels engaged.

According to the preferred embodiment of the present invention, dog clutch assembly 1 further comprises a support element 26 interposed between fork 25 and selection member 10, in particular central portion 11.

More in detail, support element 26 is configured to be rotatably carried by selection member 10.

Preferably, dog clutch is provided with a radial bearing 29, in particular a radial ball bearing, operatively interposed between selection member 10 and support element 26, so as to be able to transmit axial thrust between support element 26 and selection member 10 and allow the selection member 10 to rotate freely about reference axis A with respect to support element 26.

Support element 26 is configured to transmit to selection member 10 the forces, along the axial direction, imparted by fork 25.

The outer race of radial bearing 29 is preferably fitted in a an angular and axially rigid manner on central portion 11, so as to move integral with this latter.

The inner race of radial bearing 29 is preferably coupled in a an angular and axially rigid manner to support element 26, so as to move integral with this latter.

In addition, support element 26 is configured to be coupled with fork 25, so as to move integral with this latter. In other words, the fork 25 is preferably configured to be rigidly connected to the support element 26.

According to the exemplary embodiment illustrated in Figures 1, 2 and 3, support element 26 preferably comprises an annular bushing 27 interposed between the fork 25 and radial bearing 29.

More in detail, annular bushing 27 is coupled with the fork 25 so as to move integral with this latter.

In addition, the annular bushing 27 is preferably fitted in a rotatable free manner on the central portion 11 by means of radial bearing 29, such that the central portion 11 may freely rotate with respect to the annular bushing 27.

Moreover, the annular bushing 27 is preferably coupled in an axially rigid manner to the central portion 11 by means of radial bearing 29, such that the sliding sleeve 11 moves axially, along reference axis A, integral with annular bushing 27.

In this manner, fork 25 and annular bushing 27 are able to move the central portion 11 along reference axis A, in the axial direction.

More in detail, in the axial direction along reference axis A, annular bushing 27 is preferably rigidly carried by radial bearing 29 by means of retaining means.

In particular, as illustrated in Figures 1, 2 and 3, annular bushing 27 is preferably interlocked, in the axial direction, on the outer race of radial bearing 29.

The retaining means of annular bushing 27 preferably comprise an annular shoulder realized on the same annular bushing and a Seeger ring or similar retaining element interposed between the annular bushing 27 and the radial bearing 29, on the opposite sides of the annular shoulder.

With reference to the exemplary embodiment illustrated in Figure 1, 2 and 3, annular bushing 27 is preferably shaped so as to define an outer peripheral annular seat adapted to accommodate the fork 25.

More in detail, annular bushing 27 has preferably a U-shaped cross-section, so as to delimit the outer peripheral annular seat accommodating the fork 25.

The fork 25 is preferably rigidly coupled to the outer peripheral annular seat of the annular bushing 27, so as to move integral with this latter.

The operation of the above-described dog clutch assembly 1 is described in the following.

When the hydraulic actuator is not operated and fork 25 maintains the selection member 10 in the neutral position, no gear 7 or 9 is engaged and no torque transmission occurs between input shaft 3 and output shaft 5.

In such operation condition, output shaft 5 and selection member 10 are able to freely rotate about reference axis A with respect to fork 25 and annular bushing 27, without friction and wear between these latter due to the presence of bearing 28.

When hydraulic actuator moves fork 25 along reference axis A respectively to left or to right, the same fork 25 exert an axial force on the selection member 10, moving this latter and engaging the corresponding gear 7 or 9.

To maintain the same gear 7 or 9 engaged, hydraulic actuator continues to exert force on the fork 24 to maintain the selection member 10 urged in the corresponding direction.

Again, in such operation condition, output shaft 5 and selection member 10 are able to freely rotate about reference axis A with respect to fork 25 and annular bushing 27, without friction and wear between these latter due to the presence of bearing 28.

In view of the foregoing, the advantages of the dog clutch assembly 1 are apparent.

In particular, the provision of the annular bushing 27 and the radial bearing 29 between the fork 25 and the selection member 10 prevent any sliding contact between the fork 25 and the same selection member 10, while allowing transmission of axial forces to the selection member 10.

This greatly improves the reliability and duration of the component of the dog clutch assembly 1, since the wear of the fork is massively reduced.

In addition, this allows to configure the dog clutch assembly 1 as a negative dog clutch, in which the fork 25 has to keep applying an axial force on the sliding sleeve to maintain the corresponding toothed wheels engaged, since the fork 25 does not act on a rotating element and there are no application of axial forces between sliding component, with the obvious advantages that this entails. In particular, the fork 25 cooperates with the stationary annular bushing 27, and there is no wear between the same fork 25 and the annular bushing 27.

It is clear that modifications can be made to the described dog clutch assembly, which do not extend beyond the scope of protection defined by the claims.

For example, the aforementioned transmission means may comprise flexible transmission members, such as a transmission chain looped around sprockets, a transmission belt looped around pulleys or the like.

Proposed arrangements and connections may be substituted by equivalent ones.

Number of gears may vary as a function of the needs and application for the described dog clutch assembly 1.

In addition, the mechanical components described may be substituted with functional equivalent ones.

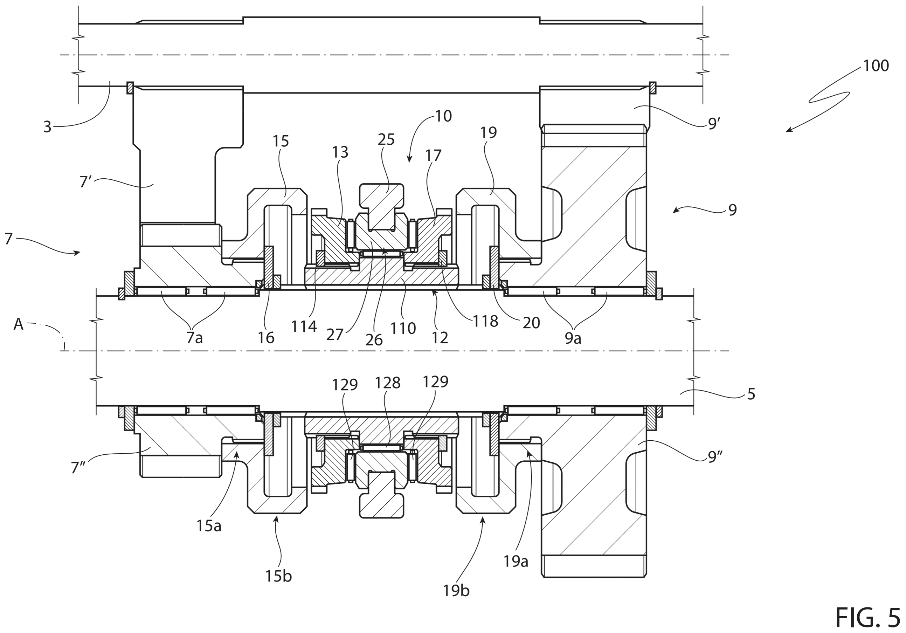

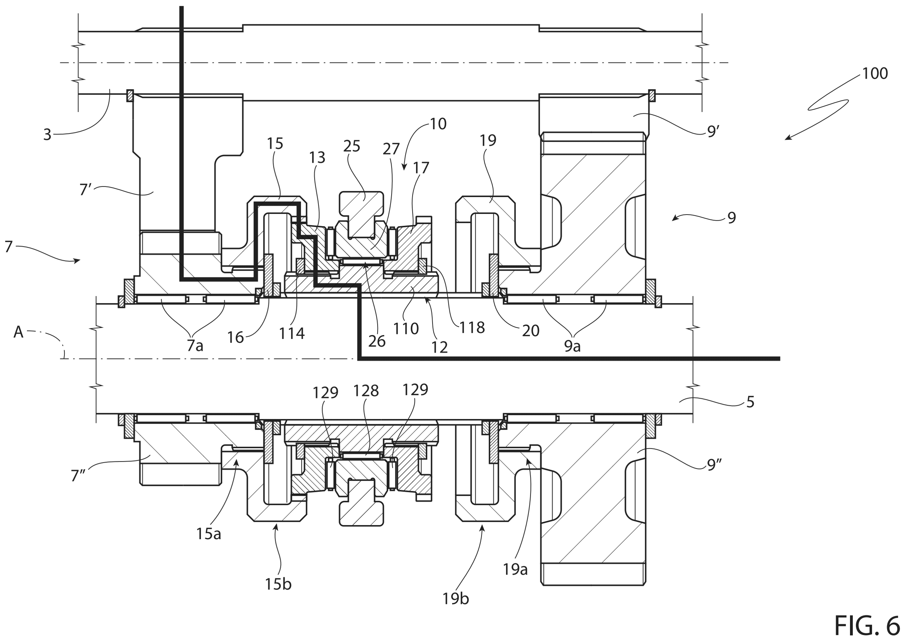

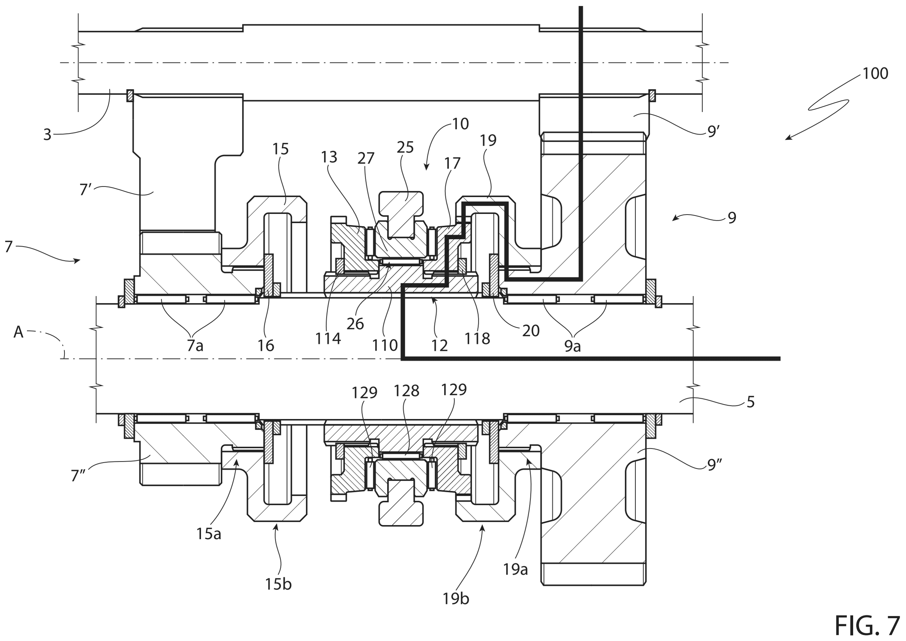

Figures 5 to 7 illustrate an embodiment of the present invention, which is similar to the one illustrated in Figure 1 to 4 and whose parts is common will be denoted with the same reference numbers.

The dog clutch assembly 100 illustrated in Figure 5 to 7 distinguishes from the one illustrated in Figure 1 to 4 in that the selection member 10 comprises a sliding sleeve carried in an axially slidable and angularly rigid manner by one between input shaft 3 or output shaft 5.

Sliding sleeve 110 is preferably configured to carry toothed wheels 13 and 17.

In other words, toothed wheels 13 and 17 may be separate and distinct from sliding sleeve 11 and may be rigidly coupled to these latter by means of retaining means. Such retaining means may comprise a spline and Seeger rings 114 and 118 configured to axially lock the corresponding toothed wheel 13 and 17 on sliding sleeve 11.

In addition, dog clutch assembly 100 may comprise a least a needle bearing 128 radially interposed between the sliding sleeve 11 and the annular bushing 27, to allow the sliding sleeve 11 to freely rotate with respect to the stationary annular bushing 27.

Moreover, dog clutch assembly 100 may comprise further bearings 129, such as thrust axial bearings, washers or the likes, which are axially interposed between the two axial ends of the annular bushing 27 and the sliding sleeve 110 or the corresponding toothed wheels 13 and 17, preferably on both sides of the same annular bushing 27, to allow transmission of axial forces from fork 25 and annular bushing 127 to sliding sleeve 110 and at the same time avoid resistance and friction between the sides of the annular bushing 27 and the same sliding sleeve 110.

## Claims

1. A dog clutch assembly (1) for a transmission assembly of a work vehicle;
said dog clutch assembly (1) being configured to transmit torque between an input shaft (3) and an output shaft (5) extending along a reference axis (A) by means of transmission means (7, 9) operatively interposed between said input shaft (3) and said output shaft (5) and comprising a first transmission member (7', 9') carried by a first one between said input shaft (3) and said output shaft (5) and a second transmission member (7'', 9'') carried by a second one between said input shaft (3) and said output shaft (5) and operatively connected to said first transmission member (7', 9'),
said dog clutch assembly (1) comprising:
• a first toothed wheel (15) carried in a rigid manner by said second transmission member (7", 9''),
• a selection member (10), which is carried in an axially slidable and angularly rigid manner by the second one between said input shaft (3) and said output shaft (5) and is provided with a second toothed wheel (13) configured to selectively engaged with said first toothed wheel (15),
• actuation means (25) configured to move said selection member (10) along said reference axis (A) between a first neutral position, in which said first toothed wheel (15) and said second toothed wheel (13) are disengaged, and a second engaged position, in which said first toothed wheel (15) and said second toothed wheel (13) are engaged,
said actuation means comprising a fork (25) configured to be operatively interposed between said selection member (10) and an actuator, in order to be able to transmit the force exerted by said actuator to said selection member (10) to move said selection member (10) between said first neutral position and said second engaged position,
said dog clutch assembly (1) further comprising a support element (26) interposed between said fork (25) and said selection member (10), wherein said support element (26) is carried in a free rotatable manner and axially rigid manner by said selection member (10) and is connected to said fork (25), so as to move integral with the fork (25).

2. Dog clutch assembly according to claim 1, wherein said support element (26) is rotatably carried by said selection member (10) by means of a bearing (29).

3. Dog clutch assembly according to claim 2, wherein said bearing (29) comprises a radial bearing (29), in particular a radial ball bearing (29).

4. Dog clutch assembly according to claim 1, 2 or 3, wherein said support element (26) comprises an annular bushing (27) interposed between said selection member (10) and said fork (25).

5. Dog clutch assembly according to claim 4, wherein said annular bushing (27) is coupled with the fork (25) so as to move integral with the fork (25).

6. Dog clutch assembly according to claim 4 or 5, wherein said annular bushing (27) is fitted in a rotatable free manner on the selection member (10), such that said selection member (10) may freely rotate with respect to the annular bushing (27) about the reference axis (A).

7. Dog clutch assembly according to claim 6, wherein said annular bushing (27) is coupled in an axially rigid manner to the selection member (10), such that the selection member (10) moves axially, along the reference axis (A), integral with the annular bushing (27).

8. Dog clutch assembly according to any of the preceding claims, wherein said selection member (10) comprises a central portion (11), which is tubular in shape, is carried in an angular rigid and sliding manner by the second one between said input shaft (3) and said output shaft (5) and rigidly carries said second toothed wheel (13).

9. Dog clutch assembly according to any of claims from 5 to 8, wherein said annular bushing (27) is preferably shaped so as to define an outer peripheral annular seat adapted to accommodate said fork (25).

10. Dog clutch assembly according to any of the preceding claims, wherein the toothing of said first toothed wheel (13) and the toothing of said second toothed wheel (15) are configured to exert, when engaged to each other, a force comprising an axial component along the reference axis (A), that bias the third toothed wheel (13) and the fourth toothed wheel (15) away from each other.

11. Dog clutch assembly according to any of the preceding claims, wherein said transmission means (7, 9) comprise:
• a first gear (7) provided with a third toothed wheel (7') carried in an angular rigid manner by said input shaft (3) and a fourth toothed wheel (7"), which engages said third toothed wheel (7') and is carried in a free rotatable manner by said output shaft (5), and
• a second gear (9) with a different transmission ratio with respect to said first gear (7) and comprising a fifth toothed wheel (9') carried by said input shaft (3) in a angular rigid manner and a sixth toothed wheel (9'') carried by said output shaft (5) in a free rotatable manner and engaging said fifth toothed wheel (9'),
said dog clutch assembly (2) further comprising:
• a seventh toothed wheel (17) carried in a rigid manner by said selection member (10), on the opposite side with respect to said second wheel (15) along the reference axis (A),
• an eighth toothed wheel (19) carried in a rigid manner by said sixth toothed wheel (9'') and configured to selectively engaged with said seventh toothed wheel (17),
said actuation means (25) being further configured to move said selection member (10) along said reference axis (A) in a third engaged position, in which said seventh toothed wheel (17) and said eighth toothed wheel (19) are engaged.

12. Transmission assembly for a work vehicle comprising a dog clutch assembly (1) realized according to any of the preceding claims.

13. Work vehicle comprising a transmission assembly according to claim 12.
